# NEUE EUROPÄISCHE PATENTSCHRIFT

(11) **EP 3 645 356 B2**
(45) Veröffentlichungstag und Bekanntmachung des Hinweises auf die Entscheidung über den Einspruch: **27.11.2024**
(45) Hinweis auf die Patenterteilung: 24.02.2021
(21) Anmeldenummer: 18725116.0
(22) Anmeldetag: 27.04.2018
(51) Int. Cl.: B60T 13/68

(54) **VERFAHREN ZUM BETREIBEN EINER ELEKTROPNEUMATISCHEN FESTSTELLBREMSANLAGE EINES FAHRZEUGZUGES**
METHOD FOR OPERATING AN ELECTRO-PNEUMATIC PARKING BRAKE OF A VEHICLE
MÉTHODE POUR OPÉRER UN FREIN DE STATIONNEMENT ÉLECTRO-PNEUMATIQUE D'UN VÉHICULE

(30) Priorität: 26.06.2017 DE 102017006006
(43) Veröffentlichungstag der Anmeldung: 06.05.2020
(73) Patentinhaber: ZF CV Systems Hannover GmbH, 30453 Hannover (DE)
(72) Erfinder: BENSCH, Uwe, 30161 Hannover (DE); GAU, Axel, 31542 Bad Nenndorf (DE); WENDLANDT, Alexander, 30457 Hannover (DE)
(74) Vertreter: Eisenführ Speiser
(86) Internationale Anmeldenummer: PCT/EP2018/060841
(87) Internationale Veröffentlichungsnummer: WO 2019/001801

(56) Entgegenhaltungen:
- EP-A1- 2 199 162
- EP-A1- 2 719 594
- DE-A1- 10 353 056
- DE-A1- 102004 010 743
- DE-A1- 102005 043 607
- DE-A1- 102005 060 225
- DE-A1- 102008 006 265
- DE-A1- 102008 018 470
- DE-A1- 102008 032 709
- DE-A1- 102008 064 077
- DE-A1- 102016 006 527
- DE-B3- 102007 033 694
- DE-B3- 102008 006 264
- DE-B3- 102008 027 732
- DE-B3- 102014 108 681
- DE-B3- 102014 108 681
- DE-B4- 102007 042 316

## Beschreibung

Die Erfindung betrifft ein Verfahren zum Betrieb einer elektropneumatischen Feststellbremsanlage eines Fahrzeugzuges, welcher aus einem Zugfahrzeug und einem Anhängefahrzeug besteht, bei dem nach einem Parkvorgang und dem Feststellen des Fahrzeugzuges im Fahrzeugstillstand eine Anhängerkontrollfunktion zu aktivieren ist, welche eine Überprüfung ermöglicht, ob bei einem Nachlassen der Bremswirkung des Anhängefahrzeugs der Fahrzeugzug alleine durch die Bremswirkung einer Feststellbremse des Zugfahrzeugs festgehalten werden kann.
Ein solches Verfahren ist aus EP 2 719 594 A1 bekannt.

Derartige elektropneumatische Feststellbremsanlagen von Fahrzeugzügen, oft auch als Parkbremssystem oder Handbremssystem bezeichnet, sind bekannt. Die Funktionsweise und Steuerung einer derartigen Feststellbremsanlage ist beispielsweise in der DE 10 2005 060 225 A1 beschrieben.

Als Anhängerkontrollfunktion wird dabei ein Zustand der Feststellbremsanlage bezeichnet, bei dem bei an sich angelegter Feststellbremse die Bremsen eines mit dem Zugfahrzeug verbundenen Anhängefahrzeugs gelöst werden, um dem Fahrer des Zugfahrzeuges eine Möglichkeit zu geben, zu überprüfen, ob bei abgestelltem Fahrzeug die Bremswirkung der Feststellbremse des Zugfahrzeuges alleine ausreicht, um den gesamten Fahrzeugzug am Wegrollen zu hindern. Eine derartige Überprüfung ist insbesondere bei Anhängern erforderlich, bei denen etwa infolge von schleichendem Druckverlust bei längerfristigem Abstellen des Fahrzeuges sich die Bremsen des Anhängers lösen könnten. Auch in diesem Fall muss sichergestellt sein, dass der Fahrzeugzug nicht wegrollt, was demzufolge von der Feststellbremse des Zugfahrzeuges bewirkt werden muss. Die Anhängerkontrollfunktion wird üblicherweise vom Fahrer unmittelbar nach dem Abstellen des Fahrzeugzugs und der Betätigung der Feststellbremse manuell von Hand durch Betätigen eines Bedienelements wie eines Hebels oder Schalters ausgelöst und von einer elektronischen Steuerung durchgeführt.

Aus der EP 2 379 386 B1 ist eine Betätigungseinrichtung für ein Parkbremssystem eines Nutzfahrzeugs bekannt, die ein manuell betätigbares Bedienelement zur Betätigung der Parkbremse aufweist. Die Betätigungseinrichtung kann vom Fahrer im Falle der zuvor eingelegten Parkbremse manuell in einen bestimmten Schaltzustand versetzt werden, in dem eine Anhängerkontrollfunktion bereitgestellt wird. Dazu kann der Fahrer eine Schalterwippe aus einer federbelasteten Neutralposition heraus verschwenken.

Aus der EP 1 997 700 B1 ist eine weitere Betätigungseinrichtung für ein Parkbremssystem eines Nutzfahrzeugs mit einem Betätigungselement bekannt, bei der die Betätigungseinrichtung eine Anhängerkontrollstellung aufweist, wobei in einer von mehreren verfügbaren Auslenkpositionen des Betätigungselements eine Anhängerkontrollfunktion aktivierbar ist. Dazu kann der Fahrer einen federbelasteten Drehschalter in seiner Winkelstellung verdrehen. Wenn sich das Betätigungselement in der Anhängerkontrollstellung befindet, bewirkt eine elektronische Steuerung des Parkbremssystem bei stehendem Fahrzeug oder bereits aktivierter Parkbremse eine Betätigung eines Anhängerkontrollventils, wodurch ein pneumatischer Steueranschluss eines Anhängersteuerventils mit einem Vorratsdruck beaufschlagt wird. Aufgrund einer invertierenden Wirkungsweise des Anhängersteuerventils werden infolge der Druckbeaufschlagung die Bremsen des Anhängers gelöst. Dieser Zustand hält so lange an, wie die Betätigungseinrichtung in der Anhängerkontrollstellung gehalten wird. Die Parkbremse des dem Anhängefahrzeug zugeordneten Zugfahrzeugs bleibt dabei eingelegt. Sobald die Anhängerkontrollstellung verlassen wird, schaltet die Steuerung das Anhängerkontrollventil wieder in seine ursprüngliche Schaltstellung. Hierdurch wird der Steueranschluss des Anhängersteuerventils entlüftet und die Bremsen des Anhängefahrzeuges in den vor Aktivierung der Anhängerkontrollstellung liegenden Betätigungszustand zurückversetzt. Die Steuerung ignoriert eine eventuelle Betätigung der Betätigungseinrichtung in die Anhängerkontrollstellung bei fahrendem Fahrzeug.

Die DE 103 36 611 A1 beschreibt eine Feststellbremsanlage eines Fahrzeugs, bei der ein durch einen Fahrer bedienbarer Betätigungshebel manuell verschwenkbar angeordnet ist. Der Betätigungshebel weist eine Einraststellung auf, in der eine Feststellbremsfunktion aktiviert ist. Durch eine weitere Verschwenkung des Betätigungshebels über die Einraststellung hinaus kann der Betätigungshebel in eine Anhängerkontrollstellung betätigt und dadurch eine Anhängerkontrollfunktion aktiviert werden. Ein Loslassen des Betätigungshebels aus dieser Anhängerkontrollstellung bewirkt infolge einer Rückstellfederkraft ein Zurückstellen des Betätigungshebels in die Einraststellung.

Außerdem sind bereits auch Feststellbremsanlagen in der Entwicklung, deren Steuerung eine automatische Feststellfunktion enthält. Diese Funktion bewirkt eine automatische Anwendung der Parkbremse, wenn ein Parkvorgang erkannt wird und wenn eine Steuerung ein diesbezügliches Signal empfängt. Eine derartige Funktion kann den Fahrer eines Nutzfahrzeugs unterstützen und seine tägliche Arbeit erleichtern. Bei einem Fahrzeugzug, welcher mit einer automatischen Feststellfunktion betrieben wird, entfällt die Notwendigkeit, dass der Fahrer die Handbremse beziehungsweise Parkbremse aktiv betätigt. Hierdurch kann es vorkommen, dass der Fahrer die Betätigung der Anhängerkontrollfunktion vergisst und der Fahrzeugzug demzufolge möglicherweise unzureichend gesichert ist.

Die EP 2 199 162 A1 beschreibt ein Verfahren zum Betrieb einer Feststellbremseinrichtung mit einem ersten Zustand, bei dem ein Druck zum Betätigen eines Bremszylinders absenkbar ist, sowie mit einem zweiten Zustand, in dem der Druck gehalten werden kann. Im Falle eines Stillstands bei gelöster Feststellbremse wird der zweite Zustand eingenommen, und falls im zweiten Zustand die elektrische Energieversorgung unterbrochen wird, wird der erste Zustand eingenommen.

Die DE 10 2007 033 694 B3 beschreibt eine Parkbremse für ein Anhängerfahrzeug, bei der beim Betätigen eines Bedienorgans "Parkposition" zunächst nur eine Federspeicherbremse des Zugfahrzeugs aktiviert wird. Erst nach Ablauf einer vorgegebenen Zeitdauer wird danach die Bremse des Anhängers aktiviert.

Vor diesem Hintergrund lag der Erfindung die Aufgabe zugrunde, ein Verfahren zum Betrieb einer elektropneumatischen Feststellbremsanlage eines Fahrzeugzugs mit einer Anhängerkontrollfunktion vorzuschlagen, welches den Bedienkomfort des Fahrzeugzugs erhöht und zugleich eine hohe Betriebssicherheit gewährleistet.

Die Lösung dieser Aufgabe ergibt sich aus den Merkmalen des unabhängigen Anspruchs, während vorteilhafte Ausgestaltungen und Weiterbildungen der Erfindung den zugeordneten Unteransprüchen entnehmbar sind.

Der Erfindung lag die Erkenntnis zugrunde, dass bei einem Fahrzeugzug, der mit einer automatischen Feststellfunktion betreibbar ist, die obligatorische Anhängerkontrollfunktion nach wie vor durch eine manuelle Bedienung durch den Fahrer aktivierbar ist. Dies kann jedoch den an sich hohen Komfort einer derartigen automatischen Feststellfunktion beeinträchtigen und sogar zu Bedienungsfehlern verleiten. Derartige Bedienungsfehler sind durch eine Erweiterung einer vorhandenen automatischen Steuerung der Feststellbremsanlage zuverlässig vermeidbar.

Die Erfindung geht daher aus von einem Verfahren zum Betrieb einer elektropneumatischen Feststellbremsanlage eines Fahrzeugzuges, welcher aus einem Zugfahrzeug und einem Anhängefahrzeug besteht, bei dem nach einem Parkvorgang und dem Feststellen des Fahrzeugzuges im Fahrzeugstillstand eine Anhängerkontrollfunktion zu aktivieren ist, welche eine Überprüfung ermöglicht, ob bei einem Nachlassen der Bremswirkung des Anhängefahrzeugs der Fahrzeugzug alleine durch die Bremswirkung einer Feststellbremse des Zugfahrzeugs festgehalten werden kann.

Zur Lösung der gestellten Aufgabe sieht die Erfindung vor, dass dann, wenn ein Fahrzeugzug durch eine automatische Feststellfunktion selbständig festgebremst wurde, die Anhängerkontrollfunktion automatisch durchgeführt wird.

Dadurch, dass die Anhängerkontrollfunktion automatisch aktiviert wird, vereinfacht sich die Bedienung des Fahrzeugs. Der Fahrer wird durch das Entfallen eines Arbeitsschritts zum Ein- und Ausschalten der Anhängerkontrollfunktion bei seiner Tätigkeit entlastet. Dies ist insbesondere von Vorteil, wenn der Fahrzeugzug ohnehin mit einer automatischen Feststellfunktion ausgestattet ist, welche den Fahrzeugzug in einer Parkposition festbremst. Der Fahrer kann somit nicht der Gefahr unterliegen, die notwendige Anhängerbremskontrolle nach dem Abstellen des Fahrzeugzugs zu vergessen.

Sollte sich bei der bevorzugt unmittelbar nach der automatisierten Betätigung der Feststellbremse automatisch durchgeführten Anhängerkontrollfunktion herausstellen, dass sich der Fahrzeugzug bei gelösten Anhängerbremsen bewegt beziehungsweise anrollt, hat der Fahrer die Möglichkeit einzugreifen und den Fahrzeugzug gegen ein unbeabsichtigtes Wegrollen zu sichern. Nach der Bremsprüfung wird die Anhängerkontrollfunktion automatisch deaktiviert und die Anhängerbremsen wieder angelegt, so dass die komplette Fahrzeugkombination bremst. Die automatische Anhängerkontrollfunktion kann als eine Softwarefunktion in eine bestehende elektronische Steuerung einer elektropneumatischen Feststellbremsanlage implementiert werden. Ein zusätzlicher Hardwareaufwand ist nicht erforderlich.

Erfindungsgemäß ist vorgesehen, dass die automatische Feststellfunktion einen Parkvorgang des Fahrzeugzugs dann erkennt und anschließend den Fahrzeugzug festbremst, wenn eine Zündanlage eines Antriebsmotors des Zugfahrzeugs im Fahrzeugstillstand ausgeschaltet ist und dieses einer Steuerung der Feststellbremsanlage signalisiert wird, und dass unmittelbar danach die Anhängerkontrollfunktion automatisch aktiviert und nach dem Kontrollvorgang automatisch wieder deaktiviert wird. Dadurch wird sichergestellt, dass die Anhängerkontrollfunktion nicht unbeabsichtigt in dafür nicht vorgesehenen Betriebssituationen des Fahrzeugzugs durchgeführt wird.

Außerdem ist erfindungsgemäß vorgesehen, dass die automatische Aktivierung und Deaktivierung der Anhängerkontrollfunktion unterdrückt sowie die Anhängerkontrollfunktion manuell betätigt werden kann, wenn die automatische Feststellfunktion ebenfalls unterdrückt und die Feststellfunktion manuell betätigt werden kann, soweit der Fahrzeugzug eine Betätigungseinrichtung mit einem Bedienelement für eine manuelle Betätigung der Feststellbremsanlage sowie für eine manuelle Betätigung der Anhängerkontrollfunktion aufweist.

Dadurch erhält der Fahrer die Möglichkeit, in besonderen Betriebssituationen die Anhängerkontrollfunktion manuell zu betätigen, wenn deren automatische Aktivierung oder Deaktivierung aktuell nicht gewünscht wird oder nicht möglich ist. Beispielseise könnte durch
die Betätigung eines Bedienelements die automatische Funktion ausgeschaltet und durch erneutes Betätigen des Bedienelements wieder eingeschaltet werden. So kann es beispielweise gewünscht sein, den Fahrzeugzug festzustellen und die Anhängerkontrollfunktion durchzuführen, obwohl die Zündanlage nicht ausgeschaltet ist oder nicht ausgeschaltet werden soll. Der Fahrer könnte die Bremskontrolle im Zweifelsfall auch zeitlich verlängern. Andererseits kann auf eine Bremskontrolle des Anhängefahrzeugs in bestimmten Situationen auch bewusst verzichtet werden, beispielsweise wenn ohnehin nur ein kurzer Halt vorgesehen ist und der Fahrer das Fahrzeug dabei nicht verlässt.

Erfindungsgemäß wird vorgesehen, dass die automatische Aktivierung und Deaktivierung der Anhängerkontrollfunktion dem Fahrer optisch, akustisch und/oder haptisch angezeigt wird. Dazu kann beispielsweise eine Leuchtanzeige an geeigneter Stelle im Armaturenbereich des Führerhauses angeordnet sein. Dadurch ist der Fahrer stets darüber informiert, ob die Anhängerkontrollfunktion durch die automatische Steuerung durchgeführt wurde beziehungsweise nicht durchgeführt wurde, und ob der Fahrzeugzug, für dessen betriebssicheres Abstellen er verantwortlich ist, vorschriftsmäßig gesichert ist. Schließlich betrifft die Erfindung auch eine elektropneumatische Feststellbremsanlage eines Fahrzeugzugs, wie beispielsweise einer Sattelzugmaschine mit Sattelanhänger oder einem Lastkraftwagen mit Lastanhänger, welche derartig ausgebildet ist, dass mittels dieser das beschriebene Verfahren betreibbar ist.

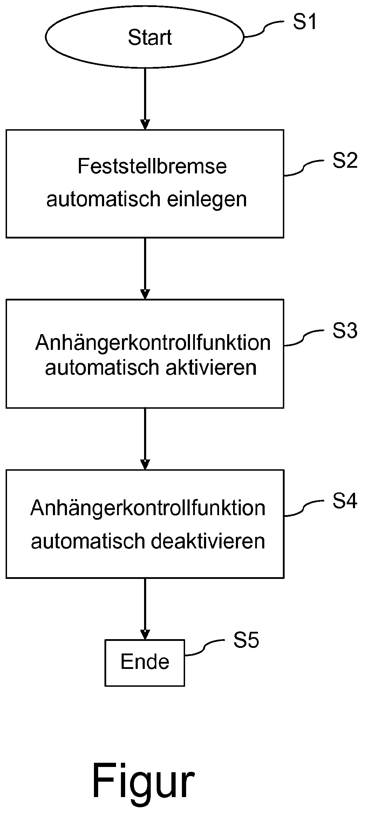

Die Erfindung wird nachstehend anhand von einem in der beigefügten Zeichnung dargestellten Ausführungsbeispiel näher erläutert. In der Zeichnung zeigt die einzige Figur ein Flussdiagramm zur Veranschaulichung einer automatischen Aktivierung einer Anhängerkontrollfunktion gemäß der Erfindung.

Nach dem bisherigen Stand der Technik wird eine Anhängerkontrollfunktion eines aus einem Zugfahrzeug und einem Anhängefahrzeug bestehenden Fahrzeugzugs, aufweisend eine elektropneumatische Feststellbremsanlage, manuell durch den Fahrer nach dem Einlegen der Feststellbremse aktiviert. Dies kann beispielsweise wie in der eingangs erwähnten EP 2 379 386 B1 mittels einer Schalterwippe erfolgen, welche vom Fahrer aus einer federbelasteten Neutralposition heraus in einen bestimmte Schaltstellung gekippt wird, oder wie in der eingangs erwähnten EP 1 997 700 B1, indem der Fahrer einen federbelasteten Drehschalter in seiner Winkelstellung in eine bestimmte Schaltstellung verdreht, oder wie in der eingangs erwähnten DE 103 36 611 A1 dadurch, dass der Fahrer einen federbelasteten Betätigungshebel in eine bestimmte Schaltstellung verschwenkt.

In diesem Schaltzustand wird für die Dauer der Betätigung des Bedienelements, solange der Fahrer das Bedienelement nicht wieder loslässt und dieses in eine Neutralposition nicht wieder zurückgekehrt ist, die Feststellbremse des Anhängefahrzeugs gelöst. Es kann somit festgestellt werden, ob die Feststellbremse des Zugfahrzeugs in der Lage ist, den gesamten Fahrzeugzug einschließlich des ungebremsten Anhängefahrzeugs festgestellt zu halten. Dies ist insbesondere dann erforderlich, wenn der Fahrzeugzug länger abgestellt werden soll und die Bremswirkung bei belüfteten Bremszylindern am Anhängefahrzeug erreicht wird. Wenn nach längerer Zeit durch einen Druckverlust diese Bremszylinder entlüftet sind, entfällt nämlich die Bremswirkung des Anhängefahrzeugs, so dass der Fahrzeugzug allein mittels der Bremswirkung der Feststellbremse des Zugfahrzeugs gehalten werden muss. Das für die Prüfung notwendige testweise Lösen und nach der Prüfung erneute Anlegen der Anhängerfeststellbremsen erfolgt mittels einer elektronischen Steuerung über ein elektropneumatisches System, welches die betreffenden Bremszylinder über Ventile und Stellglieder in bekannter Weise ansteuert, beispielsweise wie in den erwähnten Druckschriften beschrieben.

Wenn nun der Fahrzeugzug mit einer automatischen Feststellfunktion ausgestattet ist, wodurch beim Parken des Fahrzeugzugs und nach dem Ausschalten der Zündung automatisch die Feststellbremse eingelegt wird, müsste der Fahrer eigentlich anschließend noch manuell die Anhängerkontrollfunktion aktivieren, um zu kontrollieren, ob die Feststellbremse des Zugfahrzeugs in der Lage ist, den gesamten Fahrzeugzug einschließlich des ungebremsten Anhängefahrzeugs festgestellt zu halten.

Gemäß der Erfindung muss der Fahrer im Unterschied dazu nun nicht mehr manuell ein Bedienelement betätigen, wenn die Feststellbremse bereits automatisch eingelegt wurde. Wie aus dem Flussdiagramm gemäß der einzigen Figur hervorgeht, erfolgt die Aktivierung der Anhängerkontrollfunktion nunmehr gemäß der Erfindung automatisch.

Demnach startet das Verfahren in einem ersten Verfahrensschritt S1 bei einem erkannten Parkvorgang, sofern die elektropneumatische Feststellbremsanlage des Fahrzeugzugs eine automatische Feststellfunktion aufweist und diese aktiviert ist. Der Fahrzeugzug wird nach dem Parken und dem Ausschalten der Zündung der Antriebsmaschine in einem zweiten Verfahrensschritt S2 automatisch festgestellt beziehungsweise festgebremst. Anschließend wird die Anhängerkontrollfunktion in einem dritten Verfahrensschritt S3 automatisch aktiviert. Eine elektronische Steuerung löst dabei temporär die Feststellbremse des Anhängefahrzeugs. Es kann somit festgestellt werden, ob die Feststellbremse des Zugfahrzeugs in der Lage ist, den gesamten Fahrzeugzug einschließlich des ungebremsten Anhängefahrzeugs festgestellt zu halten. In einem vierten Verfahrensschritt S4 wird die Feststellbremse des Anhängefahrzeugs wieder eingelegt und die Anhängerkontrollfunktion automatisch deaktiviert. Das Verfahren endet in einem fünften Verfahrensschritt S5.

Die fünf Verfahrensschritte S1 - S5 können Teil eines gesamten Steuerungsablaufs der elektropneumatischen Feststellbremsanlage des Fahrzeugzugs sein. Falls festgestellt wird, dass der Fahrzeugzug durch die Feststellbremse des Zugfahrzeugs alleine nur unzureichend gesichert ist, kann der Fahrer zusätzliche Maßnahmen zur Sicherung des Fahrzeugzugs gegen Wegrollen einleiten beziehungsweise durchführen.

## Patentansprüche

1. Verfahren zum Betrieb einer elektropneumatischen Feststellbremsanlage eines Fahrzeugzuges, welcher aus einem Zugfahrzeug und einem Anhängefahrzeug besteht, bei dem nach einem Parkvorgang und dem Feststellen des Fahrzeugzuges im Fahrzeugstillstand eine Anhängerkontrollfunktion zu aktivieren ist, welche eine Überprüfung ermöglicht, ob bei einem Nachlassen der Bremswirkung des Anhängefahrzeugs der Fahrzeugzug alleine durch die Bremswirkung einer Feststellbremse des Zugfahrzeugs festgehalten werden kann, bei dem dann, wenn ein Fahrzeugzug durch eine automatische Feststellfunktion selbständig festgebremst wurde, die Anhängerkontrollfunktion automatisch durchgeführt wird, **dadurch gekennzeichnet, dass** die automatische Aktivierung und Deaktivierung der Anhängerkontrollfunktion dem Fahrer optisch, akustisch und/oder haptisch angezeigt wird, wobei die automatische Feststellfunktion einen Parkvorgang des Fahrzeugzugs dann erkennt und anschließend den Fahrzeugzug festbremst, wenn eine Zündanlage eines Antriebsmotors des Zugfahrzeugs im Fahrzeugstillstand ausgeschaltet ist und dieses einer Steuerung der Feststellbremsanlage signalisiert wird, und dass unmittelbar danach die Anhängerkontrollfunktion automatisch aktiviert und nach dem Kontrollvorgang automatisch wieder deaktiviert wird, und wobei die automatische Aktivierung und Deaktivierung der Anhängerkontrollfunktion unterdrückt sowie die Anhängerkontrollfunktion manuell betätigt werden kann, wenn die automatische Feststellfunktion ebenfalls unterdrückt und die Feststellfunktion manuell betätigt werden kann, soweit der Fahrzeugzug eine Betätigungseinrichtung mit einem Bedienelement für eine manuelle Betätigung der Feststellbremsanlage sowie für eine manuelle Betätigung der Anhängerkontrollfunktion aufweist.

2. Elektropneumatische Feststellbremsanlage eines Fahrzeugzugs, welche zur Durchführung eines Verfahrens nach Verfahrensanspruch 1 betreibbar ist.

## Claims

1. Method for operating an electropneumatic parking brake system of a vehicle combination which consists of a tractor vehicle and a trailer vehicle, in the case of which method, after a parking operation and the holding of the vehicle combination by way of a parking brake, a trailer control function is to be activated at a vehicle standstill, which trailer control function makes possible a check as to whether, in the case of a decrease in the braking action of the trailer vehicle, the vehicle combination can be held solely by way of the braking action of a parking brake of the tractor vehicle, in the case of which method, when a vehicle combination has been braked independently by way of an automatic parking brake function, the trailer control function is carried out automatically, **characterized in that** the automatic activation and deactivation of the trailer control function is indicated to the driver in a visual, acoustic and/or haptic manner, the automatic parking brake function detecting a parking operation of the vehicle combination and subsequently holding the vehicle combination by way of the parking brake when an ignition system of a drive engine of the tractor vehicle is switched off at a vehicle standstill and this is signalled to a controller of the parking brake system, and **in that** the trailer control function is activated automatically immediately afterwards and is automatically deactivated again after the control operation, and it being possible for the automatic activation and deactivation of the trailer control function to be suppressed and for the trailer control function to be actuated manually if the automatic parking brake function can likewise be suppressed and the parking brake function can be actuated manually, in so far as the vehicle combination has an actuating device with an operating element for a manual actuation of the parking brake system and for a manual actuation of the trailer control function.

2. Electropneumatic parking brake system of a vehicle combination, which electropneumatic parking brake system can be operated in order to carry out a method according to Method Claim 1.

## Revendications

1. Procédé de fonctionnement d'un système de frein de stationnement électropneumatique d'un train de véhicules comprenant un véhicule tracteur et un véhicule remorqué, procédé dans lequel une fonction de commande de remorque doit être activée après un processus de stationnement et l'immobilisation du train de véhicules lorsque le véhicule est à l'arrêt, laquelle fonction permet de vérifier si, lorsque l'effet de freinage du véhicule remorqué se relâche, le train de véhicules peut être maintenu uniquement par l'effet de freinage d'un frein de stationnement du véhicule tracteur, et dans lequel la fonction de commande de remorque est exécutée automatiquement seulement si un train de véhicules a été freiné de manière indépendante par une fonction d'immobilisation automatique, **caractérisé en ce que** l'activation et la désactivation automatiques de la fonction de commande de remorque sont indiquées au conducteur de manière visuelle, acoustique et/ou haptique, la fonction d'immobilisation automatique détectant un processus de stationnement du train de véhicules et freinant ensuite le train de véhicules seulement lorsqu'une installation d'allumage d'un moteur d'entraînement du véhicule tracteur est déconnectée lorsque le véhicule est à l'arrêt, et **en ce que** cela est signalé à une commande de l'installation de frein de stationnement et **en ce que**, immédiatement après, la fonction de commande de remorque est activée automatiquement et, après le processus de commande, de nouveau désactivée automatiquement, et l'activation et la désactivation automatiques de la fonction de commande de remorque pouvant être supprimées et la fonction de commande de remorque pouvant être actionnée manuellement si la fonction d'immobilisation automatique peut également être supprimée et la fonction d'immobilisation pouvant être actionnée manuellement, à condition que le train de véhicules comporte un dispositif d'actionnement pourvu d'un élément de commande de l'actionnement manuel de l'installation de frein de stationnement et de l'actionnement manuel de la fonction de commande de remorque.

2. Installation de frein de stationnement électropneumatique d'un train de véhicules, qui peut être utilisée pour mettre en œuvre un procédé selon la revendication 1.
